# EUROPÄISCHE PATENTSCHRIFT

(11) **EP 1 181 862 B1**
(45) Veröffentlichungstag und Bekanntmachung des Hinweises auf die Patenterteilung: **22.02.2006**
(21) Anmeldenummer: 01120269.4
(22) Anmeldetag: 23.08.2001
(51) Int. Cl.: A01K 13/00

(54) **Viehputzmaschine mit einer rotationssymmetrischen Bürstenwalze**
Cattle cleaning machine with a rotationally symmetric cylindrical brush
Machine pour nettoyer le bétail avec une brosse cylindrique à symétrie de révolution

(30) Priorität: 23.08.2000 DE 20014581 U
(43) Veröffentlichungstag der Anmeldung: 27.02.2002
(73) Patentinhaber: BLV GmbH, 3000 Bern 6 (CH)
(72) Erfinder: Heitmann, Bernhard, 48249 Dülmen (DE)
(74) Vertreter: Dantz, Jan Henning

(56) Entgegenhaltungen:
- EP-A- 0 876 778
- WO-A-01/30197
- DE-C- 19 734 289
- DE-U- 7 904 082

## Beschreibung

Die vorliegende Erfindung betrifft eine Viehputzmaschine mit einer rotationssymmetrischen und im Betrieb in einer gegenüber der vertikalen geneigten Stellung eingesetzten Bürstenwalze mit einer im wesentlichen zylindrischen Außenumfangsfläche.

Eine Viehputzmaschine der gattungsgemäßen Art ist beispielsweise aus der DE-U79 04 082 bekannt.

Die Längsachse der Bürstenwalze ist bei der Viehputzmaschine gemäß der vorgenannten Literaturstelle gegenüber der vertikalen geneigt angeordnet und kann in verschiedene Winkelstellungen gebracht werden.

Eine Viehputzmaschine -in der vorerwähnten Literaturstelle als motorbetriebene Bürstvorrichtung bezeichnet- wird überwiegend in Freilaufställen für Rindvieh aufgestellt, um den Rücken- und Seitenbereich von Rindern Bürsten, Scheuern und Reinigen zu können.

Bei einer Viehputzmaschine mit einer schräg stehenden Bürstenwalze mit zylindrischer Außenumfangsfläche ergibt sich unter rein geometrischen Gesichtspunkten nur ein sehr kleiner Kontaktbereich zwischen der Bürstenwalze einerseits und der Körperkontur eines Rindes. Da die Bürstenwalze aber eine gewisse Nachgiebigkeit aufweist, wird sich ein Rind mit seiner Außenkontur mehr oder weniger stark in die Außenfläche der Bürstenwalze eindrücken. Dadurch ergibt sich ein deutliches größerer nutzbarer Arbeitsbereich als durch die reine Geometrie der Bürstenwalze vorgegeben. Andererseits besteht aber ein Zusammenhang zwischen der Nachgiebigkeit der Bürstenwalze, dem möglichen Eindrücken der Körperkontur eines Rindes in die Außenfläche der Bürstenwalze und dem erzielbaren Reinigungseffekt.

Es sind auch Viehputzmaschinen bekannt, bei denen zwei Bürstenwalzen Verwendung finden. Dabei ist in der Regel eine Bürstenwalze lotrecht angeordnet und die zweite Bürstenwalze ist entweder horizontal oder gegenüber der Horizontalen geringfügig schräg stehend angeordnet. Auch bei derartigen Viehputzmaschincn mit zwei Bürstenwalzen wird angestrebt, einen möglichst großen Arbeitsbereich jeder einzelnen Bürstenwalze zu erzielen.

Um ein möglichst tiefes Eindringen der Körperkontur in den wirksamen Bereich der Bürstenwalze zu erzielen, sollte diese relativ "weich" sein. Hierdurch wird allerdings der erzielbare Reinigungs- oder Putzeffekt verringert.

Ein stärkerer Reinigungs- und Putzeffekt wird erzielt mit steiferen Bürstenwalzen, hierdurch wird allerdings wieder das Eindringen der äußeren Körperkontur eines Rindes in die Bürstenwalze herabgesetzt, so dass jeweils nur ein entsprechend kleiner Bereich des Rückens und/oder der Seite eines Rindes gebürstet werden kann.

Es ist auch schon vorgeschlagen worden, eine Bürstenwalze einer Viehputzmaschine mit einer konkaven Außenumfangsfläche auszustatten, um einen möglichst großen Bereich der Seite und des Rückens eines Rindes bürsten zu können. Da die Außenkontur eines Rindes aber nicht entsprechend der konkaven Außenumfangsfläche einer Bürstenwalze ausgebildet ist, ergeben sich auch hier ähnliche Probleme wie bei einer zylindrischen Bürste.

So sind beispielsweise bei einem Rind insbesondere im hinteren Endbereich zwischen den Seiten und dem Rücken auch einfallende Körperabscbnitte vorhanden, in denen bei einer konkaven Bürstenwalze auch nur ein geringer oder überhaupt kein Reinigungseffekt erzielbar ist.

Der vorliegenden Erfindung liegt die Aufgabe zugrunde, eine Viehputzmaschine der gattungsgemäßen Art zu schaffen, die einerseits einen großen Arbeitsbereich bietet und andererseits einen hohen Reinigungseffekt über den gesamten Arbeitsbereich hinweg erzielt.

Diese Aufgabe wird erfindungsgemäß durch die Merkmale des Anspruchs 1 gelöst.

Eine derart gestaltete Viehputzmaschine bietet den Vorteil, dass der äußere, relativ weiche Bereich der Bürstenwalze ein verhältnismäßig tiefes Eindrücken der Außenkontur eines Rindes in die Oberfläche der Bürstenwalze gestattet, dass dennoch aber ein guter Reinigungseffekt erzielt wird, da ab einer gewissen Eindrücktiefe ein innerer, insgesamt steiferer Bürstenkern zum Einsatz kommt.

Die Bürstenwalze einer erfindungsgemäßen Viehputzmaschine ist sozusagen stufig ausgebildet und gewährleistet so durch die große Eindringtiefe in ihre Oberfläche einen großen Arbeitsbereich, der bei entsprechend gewählter Schrägstellung der Bürstenwalze das Bürsten sowohl des Seitenbereiches wie auch des Rückenbereiches eines Rindviehs ermöglicht. Gleichzeitig wird ein sehr guter Reinigungseffekt erzielt, da die äußeren, weichen Abschnitte der Bürstenwalze auch zurückspringende oder einfallende Körperpartien des zu bürstenden Rindes bearbeiten können und der etwas steifere Bürstenkern die übrigen, entsprechend vorspringenden Körperpartien hervorragend reinigen kann, ohne dass es hierfür einer großen Eindringtiefe bedarf.

Die insbesondere unter herstellungstechnischen Gesichtspunkten gesehen einfache Ausrührungsform ergibt sich, wenn der innere Bürstenkern eine im wesentlichen zylindrische Form aufweist.

Dennoch bietet eine derart gestaltete und preiswert herstellbare Bürstenwalze alle oben erwähnten Vorteile.

Der Reinigungs- und Putzeffekt kann dadurch noch verbessert werden, dass nach einem weiteren Ausführungsbeispiel der Erfindung der innere Bürstenkern jeweils von den stimflächen ausgehend zur Mitte der Bürstenlängsachse hin konisch verjüngt ausgebildet ist.

Hierdurch kann ein noch intensiveres Eindringen der äußeren Körperkontur eines Rindes in die Bürstenwalze erfolgen, ohne dass dabei eine zu starke Belastung des zu bürstenden Rindes eintritt.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: eine Ansicht einer erfindungsgemäßen Bürstenwalze in Einsatzstellung,
- Fig. 2-4: schematische Schnittdarstellungen von Bürstenwalzen verschiedener Ausbildungen gemäß vorliegender Erfindung

In den Zeichnungen ist mit dem Bezugszeichen 1 jeweils eine rotationssymmetrische Bürstenwalze einer nicht weiter dargestellten Viehputzmaschine bezeichnet.

Die Bürstenwalze ist in an sich bekannter und deshalb nicht weiter dargestellter Weise über einen Motor um ihre Längsachse 2 rotierend antreibbar.

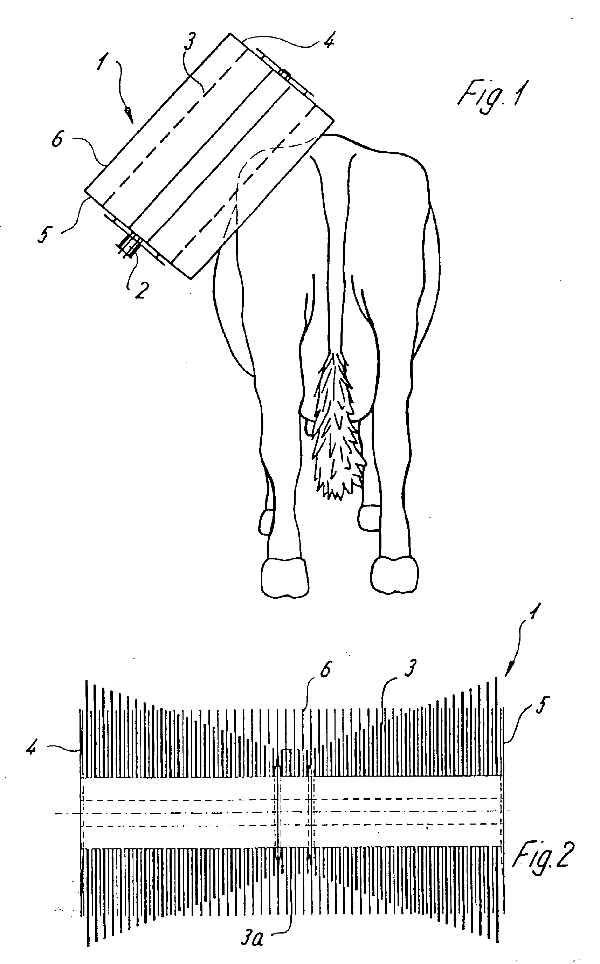

Wie sich aus der Figur 1 ergibt, wird die Bürstenwalze 1 im Betrieb in einer gegenüber der Vertikalen geneigten Stellung eingesetzt.

Ein zu bürstendes Rindvieh kann mit seiner äußeren Körperkontur in den Außenbereich der Bürstenwalze 1 eindringen oder eintauchen, da die Bürstenwalze eine gewisse Nachgiebigkeit aufweist. Dadurch ergibt sich ein relativ großer Arbeitsbereich für die Bürstenwalze 1, der das gleichzeitige Bürsten sowohl im Seiten- wie auch im Rückenbereich eines Rindviehs ermöglicht.

Die erfindungsgemäße Bürstenwalze 1 ist - unabhängig von den noch zu beschreibenden speziellen Ausführungsformen - mit einem inneren Bürstenkern 3 ausgestattet, der zumindest in einem wesentlichen Bereich der Längserstreckung der Bürstenwalze zwischen ihren Stirnflächen 4 und 5 gegenüber der Außenumfangsfläche 6 der Bürstenwalze 1 zurückversetzt ist und dessen Steifigkeit größer ist als der die Außenumfangsfläche 6 bestimmende Bürstenbereich.

Dabei ist beim Ausführungsbeispiel gemäß Figur 2 eine Bürstenwalze 1 gezeigt, bei der der innere Bürstenkern 3 von den Stirnflächen 4 und 5 ausgehend zur Mitte der Bürstenlängsachse hin konisch verjüngt ausgebildet ist und in einen relativ kleinen, zylindrischen Abschnitt 3a übergeht. Im Bereich der Stirnflächen 4 und 5 ragen die Borsten des inneren Bürstenkernes 3 sogar geringfügig über die zylindrische Außenumfangsfläche 6 der Bürstenwalze 1 hinaus vor.

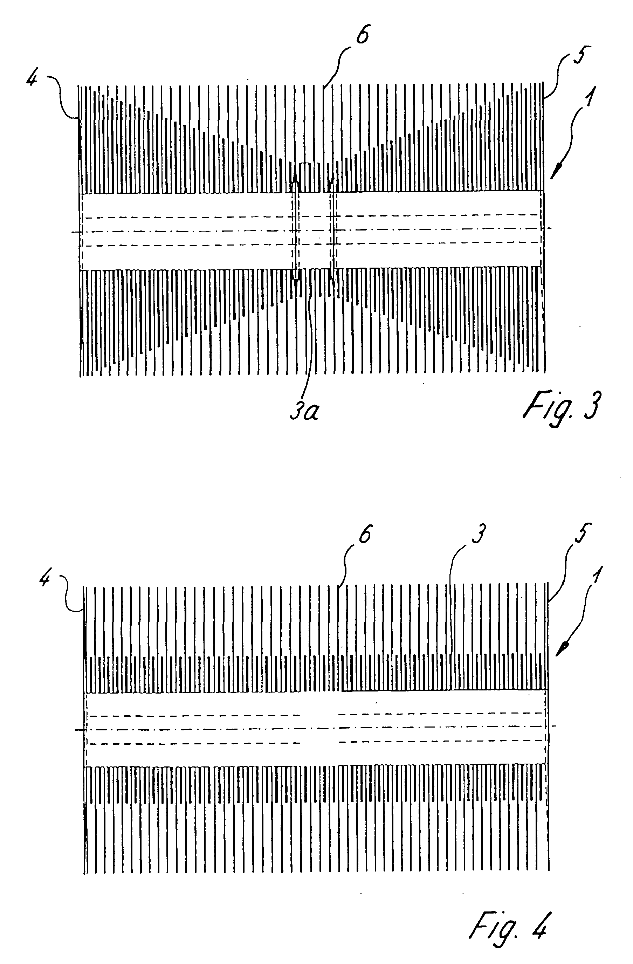

Figur 3 zeigt ein der Figur 2 ähnliches Ausführungsbeispiel, wobei der Unterschied der Bürstenwalze 1 gemäß Figur 3 gegenüber dem Ausführungsbeispiel nach Figur 2 darin besteht, daß auch die im Bereich der Stirnflächen 4 und 5 liegenden Borsten des inneren Bürstenkernes 3 nicht über die Außenumfangsfläche 6 der Bürstenwalze 1 hinaus vorstehen.

In Figur 4 ist ein Ausführungsbeispiel der Erfindung dargestellt, bei dem der innere Bürstenkern 3 ebenso wie die Außenumfangsfläche 6 eine zylindrische Form aufweist.

Bei allen Ausführungsbeispielen ist die Steifigkeit des inneren Bürstenkernes 3 größer als der die Außenumfangsfläche 6 bestimmende Bürstenbereich der Bürstenwalze 1.

Es können sowohl für den inneren Bürstenkern 3 wie auch für den die äußere Umfangsfläche 6 bestimmenden Bürstenbereich prinzipiell Borsten mit gleicher Steifigkeit verwendet werden. Die höhere Steifigkeit des inneren Bürstenkernes 3 ergibt sich alleine durch die geringere Länge der Borsten, so daß die Nachgiebigkeit des inneren Bürstenkernes 3 auch bei gleich starken Borsten geringer ist als im äußeren Umfangsbereich der Bürstenwalze 1.

Es können aber auch für den inneren Bürstenkern 3 steifere Borsten verwendet werden als für denjenigen Bürstenbereich, der die Außenumfangsfläche 6 der Bürstenwalze 1 bestimmt.

Bei Ausführungsformen der Erfindung gemäß den Figuren 2 und 3 können die im Bereich der Stirnflächen 4 und 5 liegenden Borsten des inneren Bürstenkernes 3 entsprechend ihrem stetig ansteigenden Außendurchmesser mit zunehmender Festigkeit ausgestattet sein.

## Patentansprüche

1. Viehputzmaschine mit einer rotationssymmetrischen und im Betrieb in einer der gegenüber der vertikalen geneigten Stellung eingesetzten Bürstenwalze (1) mit einer im wesentlichen zylindrischen Außenumfangsfläche, **dadurch gekennzeichnet, dass** die Bürstenwalze (1) mit zumindest in einem wesentlichen Bereich ihrer Längserstreckung zwischen den Stirnflächen (4, 5) gegenüber der Außenumfangsfläche (6) zurückversetzten inneren Bürstenkern ausgestattet ist, dessen Steifigkeit größer ist als der die Außenumfangsfläche (6) bestimmende Bürstenbereich.

2. Viehputzmaschine nach Anspruch 1, **dadurch gekennzeichnet, dass** der innere Bürstenkern (3) eine im wesentlichen zylindrische Form aufweist.

3. Viehputzmaschine nach Anspruch 1, **dadurch gekennzeichnet, dass** der inner Bürstenkern (3) jeweils von den Stirnflächen (4, 5) ausgehend zur Mitte der Bürstenlängsachse hin konisch verjüngt ausgebildet ist.

4. Viehputzmaschine nach Anspruch 3, **dadurch gekennzeichnet, dass** die konisch verjüngten Enden des inneren Bürstenkernes (3) in einen zylindrischen Abschnitt (3a) des inneren Bürstenkernes (3) einmünden.

5. Viehputzmaschine nach einem oder mehreren der vorhergehenden Ansprüche, **dadurch gekennzeichnet, dass** die Borsten des inneren Bürstenkernes (3) die gleiche Steifigkeit aufweisen wie die Borsten des die äußere Umfangsfläche (6) bestimmenden Bürstenbereiches.

6. Viehputzmaschine nach einem oder mehreren der vorhergehenden Ansprüche 1 bis 4, **dadurch gekennzeichnet, dass** die Borsten des inneren Bürstenkernes (3) in Richtung der Stirnflächen (4, 5) eine stetig zunehmende Steifigkeit aufweisen.

## Claims

1. Livestock-cleaning machine having a rotationally symmetrical brush roller (1), which has an essentially cylindrical outer circumferential surface and is used, during operation, in a position in which it is inclined in relation to the vertical, **characterized in that** the brush roller (1) is provided with at least one inner brush core (3) which, at least along a considerable region of its longitudinal extent between the end surfaces (4, 5), is set back in relation to the outer circumferential surface (6) and of which the rigidity is greater than that of the brush region which defines the outer circumferential surface (6).

2. Livestock-cleaning machine according to Claim 1, **characterized in that** the inner brush core (3) has an essentially cylindrical shape.

3. Livestock-cleaning machine according to Claim 1, **characterized in that** the inner brush core (3), starting from the end surfaces (4, 5) in each case, tapers conically in the direction of the centre of the longitudinal brush axis.

4. Livestock-cleaning machine according to Claim 3, **characterized in that** the conically tapered ends of the inner brush core (3) open out into a cylindrical section (3a) of the inner brush core (3) .

5. Livestock-cleaning machine according to one or more of the preceding claims, **characterized in that** the bristles of the inner brush core (3) have the same level of rigidity as the bristles of the brush region which defines the outer circumferential surface (6).

6. Livestock-cleaning machine according to one or more of the preceding Claims 1 to 4, **characterized in that** the bristles of the inner brush core (3) have a rigidity which increases steadily in the direction of the end surfaces (4, 5).

## Revendications

1. Machine de nettoyage de bétail comprenant une brosse cylindrique (1), à symétrie de révolution et placée, pendant le fonctionnement, dans une position inclinée par rapport à la verticale, avec une surface extérieure globalement cylindrique, **caractérisée en ce que** la brosse cylindrique (1) est munie d'au moins un noyau de brosse interne, en retrait par rapport à la surface extérieure (6), dans au moins une zone importante de son extension longitudinale entre les surfaces frontales (4, 5), dont la rigidité est plus importante que celle des brosses définissant la surface extérieure (6).

2. Machine de nettoyage de bétail selon la revendication 1, **caractérisée en ce que** le noyau de brosse interne (3) présente une forme globalement cylindrique.

3. Machine de nettoyage de bétail selon la revendication 1, **caractérisée en ce que** le noyau de brosse interne (3) se rétrécit de manière conique en partant des surfaces frontales (4, 5) jusqu'au milieu de l'axe longitudinal des brosses.

4. Machine de nettoyage de bétail selon la revendication 3, **caractérisée en ce que** les extrémités coniques du noyau de brosse interne (3) débouchent sur une partie cylindrique (3a) du noyau de brosse interne (3).

5. Machine de nettoyage de bétail selon l'une ou plusieurs des revendications précédentes, **caractérisée en ce que** les poils du noyau de brosse interne (3) présentent la même rigidité que les poils de la zone de brosse définissant la surface extérieure (6).

6. Machine de nettoyage de bétail selon l'une ou plusieurs des revendications 1 à 4, **caractérisée en ce que** les poils du noyau de brosse interne (3) présentent une rigidité qui va en augmentant constamment en direction des surfaces frontales (4, 5).
